# EUROPEAN PATENT APPLICATION

(11) **EP 0 947 800 A2**
(43) Date of publication of application: **06.10.1999**
(21) Application number: 99201008.2
(22) Date of filing: 01.04.1999
(51) Int. Cl.: G01B 3/12

(54) **Measuring instrument for lines**

(30) Priority: 01.04.1998 NL 1008779; 01.02.1999 NL 1011286
(71) Applicant: Rijlaarsdam, Cornelis Elizabeth, 2481 LA Woudbrugge (NL)
(72) Inventor: Rijlaarsdam, Cornelis Elizabeth, 2481 LA Woudbrugge (NL)
(74) Representative: Ferguson, Alexander

(57) **Abstract**

Measuring instrument for lines, which can both be operated left- and right-handedly, to measure lengths of lines in drawings directly into computer programs. The instrument is provided with a stop at the upper side, guiding ribs left and right of the keys and ribs at the lower side. The instrument is also provided with a LED, designed longitudinal symmetrical and provided with control buttons.

## Description

The invention relates to a linear measuring instrument with which straight and curved lines can be rolled off and in which the instrument is adapted to generate electronic pulses via the mechanical and opto-electronic means which pulses represent a fixed value the rolled-off length. These electric pulses are subsequently processed in micro-electronic calculators. Sofar this is known from the EU-patent D-0.211.841 and EU-patent F-0.211.841 and American patent no. 5.161.313. The inventor of the above-mentioned patent specifications is the same person as the applicant of this patent specification and has developed a new application, in which to start with use is made of the same mechatronics as described in the patents mentioned earlier. In this new invention, however, new measures are included.

From one aspect the invention provides a measuring instrument for lines, comprising a container to be supported in the hand, in which container measuring means are accommodated, the container being substantially longitudinal symmetrical and provided with control buttons for the measuring means, which control buttons are situated in an area which during use is within reach of the user's thumb, without requiring longitudinal movement of the other fingers.

The measuring instrument according to the invention can be operated in one hand, both left and right, with a lot of operational ease and great effectivity. During operation the user can keep his attention completely with the measuring, without extra actions, such as also placing the other hand on the measuring instrument, for operating the buttons.

Preferably the container is provided on both sides with a longitudinal surface for guiding the thumb, which longitudinal surface is preferably arranged for guiding the proximal pastern of the thumb and is preferably at least almost flat.

Preferably the container is provided with a measuring end with a substantially circular cross-section and of a control surface situated behind it in which the control buttons are located and which is preferably recessed. In an advantageous manner a reference surface for the thumb is formed at the location of the transition of the measuring end and the control surface, which reference surface is preferably facing away from the measuring end.

Preferably the container has a, in cross-section, curved support surface at the longitudinal side facing away from the control buttons, which support surface is preferably elliptically shaped in cross-section.

Preferably the support surface is provided with a profiled longitudinal strip for support on the transitional area between the metacarpus and the most proximal pastern of the user's index finger.

Preferably the control buttons are rounded-off, preferably convex, in the direction of movement of the thumb.

From another aspect the invention provides a measuring instrument for lines, comprising a container to be supported in the hand, in which container measuring means are accommodated, the container being substantially longitudinal symmetrical and provided with a thumb support surface and with support surfaces for other fingers of the same hand of the user, as well as of control buttons for the measuring means, which control buttons are situated in an area which during use is within reach of the user's thumb placed on the thumb support surface, without requiring longitudinal movement of the other fingers.

From another aspect the invention provides a measuring instrument for lines, comprising a container to be supported in the hand, in which container measuring means are accommodated, the container being provided with control buttons for the measuring means, and of means for connection to a data processing unit such as a computer, in which a data storage and processing program is installed which work with a matrix, such as for instance a spreadsheet or comparable database program, in order to transfer measuring data to it by means of a signal, the control buttons being connected by means of the connection means to function as cursor or tab-keys for the program mentioned.

Preferably the data processing unit is installed with a program for designating the functions of the control buttons.

In a further development the measuring instrument according to the invention comprises a first control button for starting the measuring, the control means being adapted for the transmission of the start signal, which first control button can preferably set the counting function at nil.

The measuring instrument further preferably comprises a second, third, fourth and fifth button for four different cursor or tab movements, which buttons are arranged in series with the second button closest to the measuring area of the measuring instrument, the second, third, fourth and fifth button preferably having a measuring stop function and/or a measuring storage function.

The first button preferably -of all buttons- is situated closest to the measuring end of the measuring instrument.

The second button can be programmed for a downward step movement in the spreadsheet program mentioned. The third button can be programmed for a step movement to the right in the spreadsheet program mentioned.

The fourth button can be programmed for a step movement to the left in the spreadsheet program mentioned. The fifth button can be programmed for an upward step movement in the spreadsheet program mentioned. The second, third, fourth and fifth button can have a combined function.

Preferably the first button is situated near the reference surface.

An important application of the invention is the direct measuring of length, width and height sizes in drawings for the purpose of calculating in computer programmes. When we imagine how the physical circumstances are under which these actions take place, we see a desk on which one or several drawings are spread out. These drawings often have a large size such as A2, A1 and sometimes A0. This means that the person charged with measuring regularly has to bend over the drawings and will perform the measurings with a more or less stretched arm and therefore would like to or has to support his body with the free hand. In order to prevent back problems with those who frequently have to perform these activities, it is of importance that the measuring instrument is adapted such that all functions can be operated with one and the same hand. This means that the instrument, which via a cable of sufficient length is connected to a computer, both has to be able to start the measuring function, to set at nil (reset) and to stop, but also has to be able to determine the location of the number to be fed into the software program. This location will have to be determined freely in the computer program, which means that this location can be chosen from left to right and from top to bottom, either via tabs in the software program, via the buttons placed on the instrument described according to the invention. In this way the user is no longer obliged either to rise or walk up and down to the keyboard of the computer, in between the various measurings. The function of the keys can be adjusted as desired via the software to be supplied with the invention. Practice shows that a very large percentage of the actions to determine the location in the program are performed with the key to the left or downwards or the tab.

These two keys therefore are the most within the reach of the thumb.

On the basis of the accompanying figures the invention will now be elucidated.
Figure 1 shows an exemplary embodiment of the measuring instrument according to the invention in top view;
Figure 2 shows the measuring instrument of figure 1 in side view;
Figure 3 shows the measuring instrument of figure 1 in bottom view;
Figure 4 and 5 show the measuring instrument of figure 1 in perspective; and
Figure 6 shows a cross-section through the measuring instrument of figure 1.

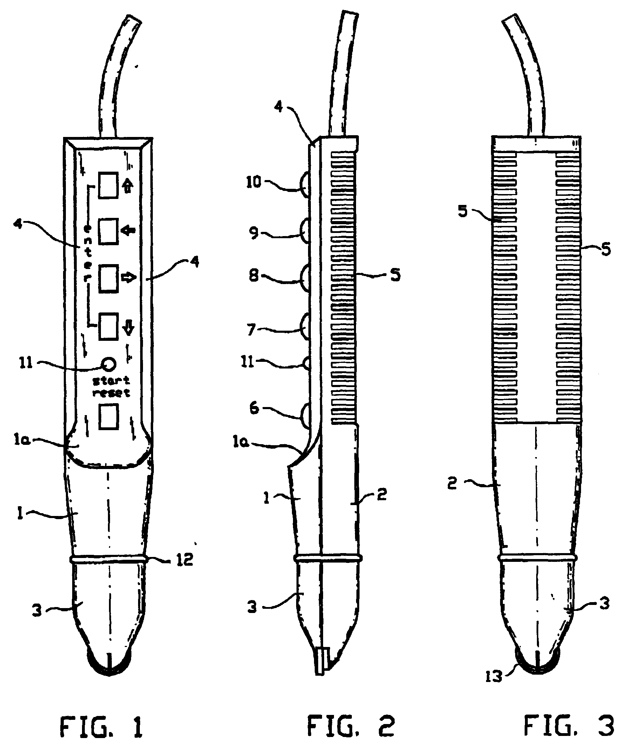

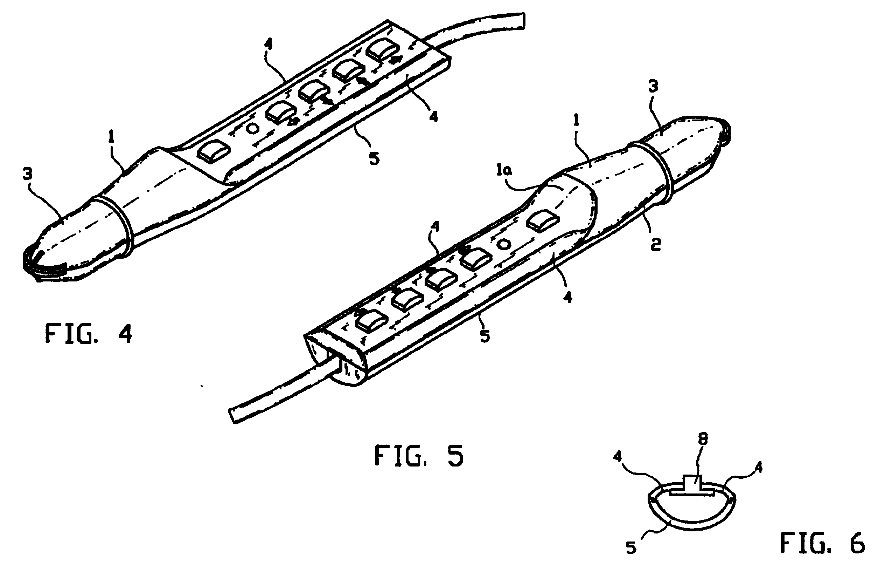

Figures 1-5 show the invention in an embodiment in which wheel case 3 with measuring wheel 13 up to the separation ring 12 are not a part of this patent specification. The casing, consisting of cover 1 and bottom 2 are provided such with characterizing features that the object described in the introduction can be realized. The writer of this patent specification would expressly like to point out that alternatives to the chosen means are possible. It is not necessary that the data collected with the measuring instrument described here are sent to the computer via a cable, this could also be done via wireless communication such as for instance infrared light, radio waves or electromagnetic waves to be processed otherwise. The data of the drawings measured by an embodiment of the instrument mentioned in this description, can also be stored in a memory chip, to be transmitted later to the software in the computer either via a docking station or via electromagnetic waves. When the user has the instrument between thumb and index finger at the level of the wheel case 3 and after the measuring the measured value has to be assessed in the computer, he then has the choice between the "enter" keys 7-10, in which the choice has to be made for that key which besides entering the measured number also chooses the next desired location in the software program. This combined function facilitates working with the present invention and limits the number of function keys on the instrument so that functional operation with one hand becomes possible. The walking up and down to the keyboard of the computer is also avoided.

In the cover 1 a reference plane 1a is arranged to give the user the feeling where he can find the keys, particularly key 6 for opening of the measuring function or setting the measuring value in the computer at nil. Important too are the surfaces 4 and the ribbed surfaces 5 which enable the user to keep the instrument in balance in the one hand, lying in the space between the thumb and the index finger. The surfaces 4 are meant to let the inside of the first pastern of the thumb slide as unimpededly as possible over the cover, so that the underside of the second pastern of the thumb can operate each wanted key. The ribbed surfaces 5 on the other hand are indeed meant to keep the instrument in balance and positioned against the skin at the level of the location where the first pastern of the index finger merges into the accompanying metacarpus. This stabilization is important, because during the opposing movement of the thumb in relation to the instrument to the chosen key, the instrument is only held to a limited extent and therefore the ribbed surfaces are necessary to prevent sliding away during operating the keys by the thumb. The upper sides of the keys consist of a curved surface so that the user's thumb does not hook the edges of the keys as soon as it moves over the keyboard. It is therefore of great importance that from the cylindrical wheel case 3, the total design of the instrument at the lower side mainly consists of curves, so that on the one hand the instrument can be turned to follow the curves in an unimpeded manner, but on the other hand can be stabilized in the hand, because in the latter case the thumb has to be used for operating the keys.

Between key 1 and 2 a LED is placed when lighting up green informs the user whether the measuring function is "open", so that when placing the instrument on a drawing to be measured he is aware of the fact that each movement of the running wheel may cause a measuring value. When the LED lights up red the measuring function is not opened.

The measuring device consists of a body which makes one-handed operation possible and which has sufficient volume to provide the lower side with ribs and guiding surfaces at the left-hand and right-hand side of the upper surface. In this way the necessary size is created to stabilize the instrument in the hand, however such that the movability of the instrument, particularly during taking measurements of curved lines, is not impeded. This ergonomic concept, together with the stop near the start key, enables the user to follow relatively small turns and corners on drawings well and to finish the measuring activities with the operation of, as desired, one of the four enter keys with the thumb of the operating hand.

## Claims

1. Measuring instrument for lines, comprising a container to be supported in the hand, in which container measuring means are accommodated, the container being substantially longitudinal symmetrical and provided with control or operation buttons for the measuring means, which control buttons are situated in an area which during use is within reach of the user's thumb, without requiring longitudinal movement of the other fingers.

2. Measuring instrument according to claim 1, the container on both sides being provided with a longitudinal surface for guiding the thumb, which longitudinal surface is preferably arranged for guiding the proximal pastern of the thumb and is preferably at least almost flat.

3. Measuring instrument according to any one of the preceding claims, the container being provided with a measuring end with a substantially circular cross-section and of a control surface situated behind it in which the control means are located and which is preferably recessed.

4. Measuring instrument according to claim 3, a reference surface for the thumb being formed at the location of the transition of the measuring end and the control surface, which reference surface is preferably facing away from the measuring end.

5. Measuring instrument according to any one of the preceding claims, the container having a, in cross-section, curved support surface at the longitudinal side facing away from the control buttons, which support surface is preferably elliptically shaped in cross-section.

6. Measuring instrument according to claim 5, the support surface being provided with a profiled longitudinal strip for support on the transitional area between the metacarpus and the most proximal pastern of the user's index finger.

7. Measuring instrument according to any one of the preceding claims, the control buttons being rounded-off, preferably convex, in the direction of movement of the thumb.

8. Measuring instrument for lines, comprising a container to be supported in the hand, in which container measuring means are accommodated, the container being substantially longitudinal symmetrical and provided with a thumb support surface and with support surfaces for other fingers of the same hand of the user, as well as of control buttons for the measuring means, which control buttons are situated in an area which during use is within reach of the user's thumb placed on the thumb support surface, without requiring longitudinal movement of the other fingers.

9. Measuring instrument for lines, comprising a container to be supported in the hand, in which container measuring means are accommodated, the container being provided with control buttons for the measuring means, and of means for connection to a data processing unit such as a computer, in which a data storage and processing program is installed which works with a matrix, such as for instance a spreadsheet or comparable database program, in order to transfer measuring data to it by means of a signal, the control buttons being connected by means of the connection means to function as cursor or tab-keys for the program mentioned.

10. Measuring instrument according to claim 9, the data processing unit being installed with a program for designating the functions of the control buttons.

11. Measuring instrument according to claim 10, comprising a first control button for starting the measuring, the control means being adapted for the transmission of the start signal, which first control button can preferably set the counting function at nil.

12. Measuring instrument according to claim 10 or 11, comprising a second, third, fourth and fifth button for four different cursor or tab movements, which buttons are arranged in series with the second button closest to the measuring area of the measuring instrument, the second, third, fourth and fifth button preferably having a measuring stop function and/or a measuring storage function.

13. Measuring instrument according to claim 12, the first button being situated closest to the measuring end of the measuring instrument.

14. Measuring instrument according to claim 12 or 13, the second button being programmed for a downward step movement in the spreadsheet program mentioned and/or the third button being programmed for a step movement to the right in the spreadsheet program mentioned and/or the fourth button being programmed for a step movement to the left in the spreadsheet program mentioned and/or the fifth button being programmed for an upward step movement in the spreadsheet program mentioned.

15. Measuring instrument according to claim 12, 13 or 14, the second, third, fourth and fifth button having a combined function.

16. Measuring instrument according to claim 7 and 13, the first button being situated near the reference surface.
